# EUROPÄISCHE PATENTSCHRIFT

(11) **EP 4 279 985 B1**
(45) Veröffentlichungstag und Bekanntmachung des Hinweises auf die Patenterteilung: **09.04.2025**
(21) Anmeldenummer: 23170127.7
(22) Anmeldetag: 26.04.2023
(51) Int. Cl.: G02F 1/13357

(54) **ANZEIGEVORRICHTUNG UND FORTBEWEGUNGSMITTEL**
DISPLAY DEVICE AND MEANS OF TRANSPORTATION
DISPOSITIF D'AFFICHAGE ET MOYEN DE LOCOMOTION

(30) Priorität: 20.05.2022 DE 102022205083
(43) Veröffentlichungstag der Anmeldung: 22.11.2023
(73) Patentinhaber: Continental Automotive Technologies GmbH, 30175 Hannover (DE)
(72) Erfinder: Joseph, Manrico, 60488 Frankfurt am Main (DE); Neupert, Ralph, 60488 Frankfurt am Main (DE)
(74) Vertreter: Continental Corporation

(56) Entgegenhaltungen:
- US-A1- 2008 068 860
- US-A1- 2011 304 798
- US-A1- 2020 287 109
- US-A1- 2020 292 885

## Beschreibung

Die vorliegende Erfindung betrifft eine Anzeigevorrichtung sowie ein Fortbewegungsmittel mit einer solchen Anzeigevorrichtung.

Anzeigevorrichtungen im Fahrzeuginnenraum befinden sich direkt vor den Fahrzeuginsassen und sind daher immer der Gefahr eines Kopfaufpralls ausgesetzt. Ein neues Produkt muss daher einen zertifizierten Kopfaufschlagtest bestehen, um verwendet werden zu dürfen.

Bei einer Anzeigevorrichtung besteht ein erhöhtes Risiko, einen solchen Test nicht zu bestehen, falls es bei dem Test zu einem Splittern des Deckglases der Anzeigevorrichtung kommt. Um dies zu verhindern, wird das Deckglas bzw. das Anzeigepaneel der Anzeigevorrichtung möglichst flächig und frühzeitig unterstützt. Hierzu ist es notwendig, die Abstände der Komponenten innerhalb der Anzeigevorrichtung so gering wie möglich auszuführen. Durch die Spaltminimierung innerhalb der Anzeigevorrichtung werden an die Fertigung der Einzelteile sowie auch an die Montage erhöhte Ansprüche hinsichtlich der Präzision gestellt.

In diesem Zusammenhang beschreibt US 2006/0203480 A1 eine Hintergrundbeleuchtung mit einer Vielzahl von Lampen zur Lichterzeugung, einer Streuscheibe, einem Gehäuse und einem ersten Stützelement. Die Streuscheibe ist über den Lampen angeordnet und streut das Licht. Das Gehäuse hat einen Bodenabschnitt und einen Seitenwandabschnitt, der sich von dem Bodenabschnitt aus erstreckt, um einen Aufnahmeraum für die Lampen zu schaffen. Das erste Stützelement ist auf dem Bodenabschnitt angeordnet, um die Streuscheibe zu stützen, und hat zwei zueinander geneigte Abschnitte, die es ermöglichen, die von der Streuscheibe auf den Bodenabschnitt übertragenen Stoßkräfte zu verringern.

Matrix-Hintergrundbeleuchtungen nutzen eine Vielzahl von in einer Matrix angeordneten Lichtquellen zur Lichterzeugung. Dies erfordert allerdings einen größeren Abstand zwischen den Lichtquellen und dem Anzeigepaneel der Anzeigevorrichtung zur Homogenisierung des Lichtes. Dieser größere Abstand erschwert die flächige und frühzeitige Unterstützung des Anzeigepaneels und somit das Bestehen des Kopfaufschlagtest.

Vor diesem Hintergrund beschreibt CN 103742840 A eine Hintergrundbeleuchtung mit einem Hohlkörper, in dem Leuchtdioden angeordnet sind, und einer optischen Platte, die auf dem Hohlkörper angeordnet ist. Die Seitenwände des Hohlkörpers sind reflektierend ausgestaltet. Im Hohlköper sind Stützsäulen zum Stützen der optischen Platte angeordnet.

US 2020/0292885 A1 beschreibt ein Display mit einer Hintergrundbeleuchtung. Die Hintergrundbeleuchtung umfasst eine Anordnung von Zellen. Jede Zelle enthält eine Lichtquelle und einen Hohlraumreflektor, der Licht von der Lichtquelle durch einen Diffusor nach außen reflektiert. Die Lichtquellen sind auf einer gedruckten Schaltung montiert. Stützpfosten auf der gedruckten Schaltung halten den Diffusor in einem festen Abstand zur gedruckten Schaltung.

US 2011/0304798 A1 beschreibt eine Beleuchtungsvorrichtung mit ersten Trennwänden, durch die eine Vielzahl von lichtemittierenden Bereichen getrennt sind, Lichtquellen, die in den jeweiligen lichtemittierenden Bereichen angeordnet sind, zweiten Trennwänden, die höher als die ersten Trennwände sind und die die Vielzahl von lichtemittierenden Bereichen einschließen, und optischen Mitteln zum Streuen des von den Lichtquellen emittierten Lichts, wobei die optischen Mittel durch die zweiten Trennwände und durch zusätzliche Stützelemente gestützt werden.

Es ist eine Aufgabe der Erfindung, eine verbesserte Anzeigevorrichtung mit einer Matrix-Hintergrundbeleuchtung bereitzustellen.

Diese Aufgabe wird durch eine Anzeigevorrichtung mit den Merkmalen des Anspruchs 1 und durch ein Fortbewegungsmittel gemäß Anspruch 10 gelöst. Bevorzugte Ausgestaltungen der Erfindung sind Gegenstand der abhängigen Ansprüche.

Gemäß einem ersten Aspekt der Erfindung weist eine Anzeigevorrichtung ein Anzeigepaneel und eine Hintergrundbeleuchtung für das Anzeigepaneel auf, wobei die Hintergrundbeleuchtung aufweist:
- einen Reflektor mit einer Vielzahl von reflektierend ausgestalteten Kavitäten;
- eine Vielzahl von jeweils in den Kavitäten angeordneten Lichtquellen; und
- Stützelemente, die für von den Lichtquellen emittiertes Licht transparent sind, sich auf eine Leiterplatte stützen, auf der die Lichtquellen angeordnet sind, und zumindest teilweise in einen Spalt zwischen den Kavitäten und einer unterhalb des Anzeigepaneels angeordneten optischen Komponente hineinragen, wobei die Stützelemente in Wände der Kavitäten eingelassen sind.

Bei der erfindungsgemäßen Lösung ist ein Reflektor zwischen den Lichtquellen und dem Anzeigepaneel angeordnet, der die bauartbedingte Lücke zwischen den Lichtquellen und dem Anzeigepaneel oder einer weiteren unterhalb des Anzeigepaneels angeordneten optischen Komponente füllt. Dieser Reflektor weist eine Vielzahl von reflektierend ausgestalteten Kavitäten auf, in denen jeweils eine Lichtquelle angeordnet ist. Die Kavitäten orientieren das aus den Lichtquellen austretende Licht in Richtung des Anzeigepaneels. Durch zusätzliche Stützelemente wird ein Brechen des Anzeigepaneels bzw. des Deckglases vermieden. Der Einsatz von Stützelementen ermöglicht es, unterschiedliche Materialien für die Stützelemente und den Reflektor zu verwenden. Da die Stützelemente gegenüber den Kavitäten hervorstehen, reichen die Wände der Kavitäten nicht bis an das Anzeigepaneel oder die weitere optische Komponente heran. Dies könnte andernfalls zu nicht ausgeleuchteten Bereichen und somit zu einer sichtbaren Gitterstruktur führen. Die Stützelemente sind transparent ausgeführt und beeinflussen die Homogenität der Ausleuchtung daher nicht.

Erfindungsgemäß sind die Stützelemente in Wände der Kavitäten eingelassen. Durch diese Ausführung des Reflektors kann dieser Energie absorbieren. Das Einlassen der Stützelemente in die Wände kann z.B. mittels Einpresstechnik oder Heißverstemmen erfolgen. Es ist nicht notwendigerweise die gesamte Fläche der Hintergrundbeleuchtung mit Stützelementen versehen. Eine lokale Positionierung ist ebenso möglich, z.B. beschränkt auf Randbereiche oder einen Mittenbereich des Anzeigepaneels. Durch eine Variation der Wandstärken oder Wandhöhen kann die Energieabsorption des Reflektors eingestellt und so auf die Anzeigevorrichtung abgestimmt werden.

Erfindungsgemäß stützen sich die Stützelemente auf eine Leiterplatte, auf der die Lichtquellen angeordnet sind. Auf diese Weise können die Stützelemente zusätzlich dazu genutzt werden, den Reflektor zu versteifen. Die Stützelemente können z.B. als Säulen mit der Leiterplatte verklebt sein.

Gemäß einem Aspekt der Erfindung sind Wände der Kavitäten verrundetet und die Kavitäten sind ausgestaltet, das von den Lichtquellen emittierte Licht in Richtung des Anzeigepaneels zu reflektieren. Durch die Verrundung kann das emittierte Licht gezielter in Richtung des Anzeigepaneels reflektiert werden. Zugleich sorgt die Verrundung bei einem Kopfaufprall für eine erhöhte Knickfestigkeit bzw. eine geringere Kerbwirkung in der Aufprallrichtung.

Gemäß einem Aspekt der Erfindung sind die Lichtquellen seitlich emittierende Leuchtdioden. Die Verwendung von seitlich emittierenden Leuchtdioden hat den Vorteil, dass eine Ausbildung von Lichtspots in der Hintergrundbeleuchtung verhindert wird. Diese sorgt für eine besonders homogen wirkende Beleuchtung des Anzeigepaneels.

Gemäß einem Aspekt der Erfindung emittieren die seitlich emittierenden Leuchtdioden allseitig Licht. Dies sorgt für eine zusätzliche Steigerung der Homogenität der Ausleuchtung des Anzeigepaneels.

Gemäß einem Aspekt der Erfindung befindet sich zwischen den Stützelementen und einer von den Stützelementen zu stützenden Komponente ein Spalt. Ein solcher Spalt hat den Vorteil, dass ein Toleranzausgleich der Einzelteile sowie eine Kompensation von Temperaturausdehnungen ermöglicht werden, ohne zusätzliche Spannung im Höhenaufbau zu erzeugen. Zudem kann der Spalt zur Lichtmischung der einzelnen Kavitäten dienen, um eine homogene Ausleuchtung sicherzustellen. Bei der zu stützenden Komponente kann es sich beispielsweise um das Anzeigepaneel handeln oder um eine zwischen dem Reflektor und dem Anzeigepaneel angeordnete optische Platte.

Gemäß einem Aspekt der Erfindung bilden die Kavitäten ein Rechteckgitter oder ein Hexagonalgitter. Der Reflektor kann auf verschiedene Weise ausgestaltet sein. Sowohl die Anordnung der Kavitäten in einem Rechteckgitter als auch die Anordnung der Kavitäten in einem Hexagonalgitter erlaubt es, den Reflektor aus einer lückenlosen Matrix von Kavitäten zu bilden.

Gemäß einem Aspekt der Erfindung sind die Stützelemente aus Polycarbonat oder Polymethylmethacrylat gebildet. Diese Materialien haben den Vorteil, dass sie die gewünschte Transparenz aufweisen und zugleich kostengünstig und leicht zu verarbeiten sind.

Vorzugsweise wird eine erfindungsgemäße Anzeigevorrichtung in einem Fortbewegungsmittel eingesetzt. Bei dem Fortbewegungsmittel kann es sich beispielsweise um ein Kraftfahrzeug handeln, alternativ aber auch um ein Luftfahrzeug, ein Schienenfahrzeug oder ein Wasserfahrzeug.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch einen Ausschnitt einer erfindungsgemäßen Anzeigevorrichtung;
- Fig. 2: zeigt schematisch eine Detailansicht einer erfindungsgemäßen Anzeigevorrichtung;
- Fig. 3: zeigt schematisch eine Ausführungsform eines Stützelements;
- Fig. 4: zeigt schematisch eine weitere Ausführungsform eines Stützelements;
- Fig. 5: zeigt schematisch eine erfindungsgemäße Ausführungsform eines Stützelements;
- Fig. 6: zeigt schematisch eine weitere Ausführungsform eines Stützelements;
- Fig. 7: zeigt schematisch einen Reflektor, bei dem ein Rechteckgitter ausgebildet ist;
- Fig. 8: zeigt schematisch einen Reflektor, bei dem ein Hexagonalgitter ausgebildet ist; und
- Fig. 9: zeigt schematisch ein Fortbewegungsmittel, das eine erfindungsgemäße Anzeigevorrichtung nutzt.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

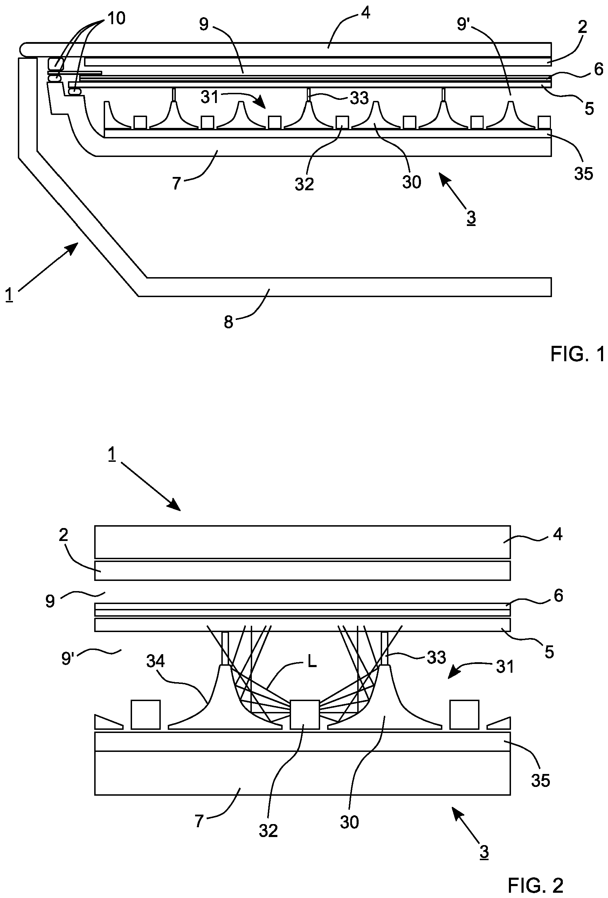

Fig. 1 zeigt schematisch einen Ausschnitt einer erfindungsgemäßen Anzeigevorrichtung 1. Die Anzeigevorrichtung 1 weist ein Anzeigepaneel 2 auf, das mit einem Deckglas 4 verklebt ist. Das Deckglas 4 schließt ein Gehäuse 8 der Anzeigevorrichtung 1 gegenüber der Umgebung ab. In einem weiteren Gehäuse 7 ist eine Hintergrundbeleuchtung 3 für das Anzeigepaneel 2 angeordnet. Die Hintergrundbeleuchtung 3 weist einen Reflektor 30 mit einer Vielzahl von Kavitäten 31 auf. In den Kavitäten 31 ist jeweils eine Lichtquelle 32 angeordnet, typischerweise eine Leuchtdiode. Die Lichtquellen 32 sind auf einer Leiterplatte 35 angeordnet, die mit dem Gehäuse 7 der Hintergrundbeleuchtung 3 verklebt sein kann. Durch zusätzliche Stützelemente 33 wird ein Brechen des Anzeigepaneels 2 bzw. des Deckglases 4 bei einem Kopfaufprall verhindert. Die Stützelemente 33 sind für das von den Lichtquellen 32 emittierte Licht transparent und stehen gegenüber den Kavitäten 31 hervor. Zwischen der Hintergrundbeleuchtung 3 und dem Anzeigepaneel 2 befindet sich im dargestellten Beispiel eine optische Platte 5 mit einem darauf angeordneten Folienstapel 6. Die Folien des optischen Folienstapels 6 haben die Aufgabe, das Licht aus dem Reflektor 30 so zu streuen, zu sammeln oder zu richten, dass die Anforderungen an die Raumwinkel der Hintergrundbeleuchtung 3 erfüllt werden. Typische Folien zur Lichtausrichtung sind Helligkeitsverbesserungsfilme (engl. Brightness Enhancement Film, BEF) und Lichtkontrollfilme (engl. Light Control Film, LCF). Bei der optischen Platte 5 handelt es sich um eine transparente Platte, die den optischen Abstand zwischen dem optischen Folienstapel 6 und den Lichtquellen 32 sicherstellt. Das Deckglas 4, die optische Platte 5 und das Gehäuse 7 der Hintergrundbeleuchtung 3 sind durch geeignete Verbindungselemente 10, z.B. Verklebungen, miteinander verbunden. Zwischen dem Folienstapel 6 und dem Anzeigepaneel 2 befindet sich ein Spalt 9. Ein weiterer Spalt 9' befindet sich zwischen der optischen Platte 5 und den Kavitäten 31. Der Spalt 9 zwischen dem Anzeigepaneel 2 und der optischen Platte 5 mit dem darauf angeordneten Folienstapel 6 ist so schmal, dass das Deckglas 4 noch nicht bricht, wenn es soweit verformt wird, das es diesen Spalt 9 auf Null reduziert hat. Bei einer weiteren Verformung kommt das Deckglas 4 über die optische Platte 5 und den Folienstapel 6 mit den Stützelementen 33 in Kontakt und wird durch diese so unterstützt, dass es sich nicht weiter durchbiegt, sondern durch die darunterliegenden Teile abgestützt wird.

Fig. 2 zeigt schematisch eine Detailansicht einer erfindungsgemäßen Anzeigevorrichtung 1. Zu sehen sind das Deckglas 4 mit dem Anzeigepaneel 2, die optische Platte 5 mit dem Folienstapel 6 und die Hintergrundbeleuchtung 3 mit dem Gehäuse 7, der Leiterplatte 35 mit den darauf angeordneten Lichtquellen 32 und dem Reflektor 30. Bei den Lichtquellen 32 handelt es sich hier um seitlich emittierende Leuchtdioden, die vorzugsweise allseitig Licht L emittieren. Die reflektierend ausgestalteten Wände 34 der Kavitäten 31 des Reflektors 30 sind verrundet ausgestaltet und orientieren das aus den Lichtquellen 32 austretende Licht L in Richtung des Anzeigepaneels 2. Zugleich sorgt die Verrundung bei einem Kopfaufprall für eine erhöhte Knickfestigkeit bzw. eine geringere Kerbwirkung in der Aufprallrichtung. Die transparenten Stützelemente 33 lassen das Licht L, abgesehen von einer in Fig. 2 nicht dargestellten Brechung, ungehindert passieren. Geeignete Materialien für die Stützelemente 33 sind z.B. Polycarbonat oder Polymethylmethacrylat. In einer exemplarischen Ausgestaltung liegt die gesamte Aufbauhöhe der Anzeigevorrichtung vorzugsweise im Bereich von ~13,3 mm. Die Höhe des Reflektors 30 kann ~3,72 mm betragen, die Breite der Wände 34 an ihrer breitesten Stelle ~6,13 mm. Der Spalt 9 zwischen dem Folienstapel 6 und dem Anzeigepaneel 2 hat eine Höhe von ~1,31 mm, der Spalt 9' zwischen dem Reflektor 30 und der optischen Platte 5 hat eine Höhe von ~1,05 mm. Der Abstand zwischen den Lichtquellen 32 kann z.B. ~9,13 mm betragen. Durch eine Variation der Wandstärken oder Wandhöhen kann die Energieabsorption des Reflektors 30 eingestellt und so auf die Anzeigevorrichtung 1 abgestimmt werden.

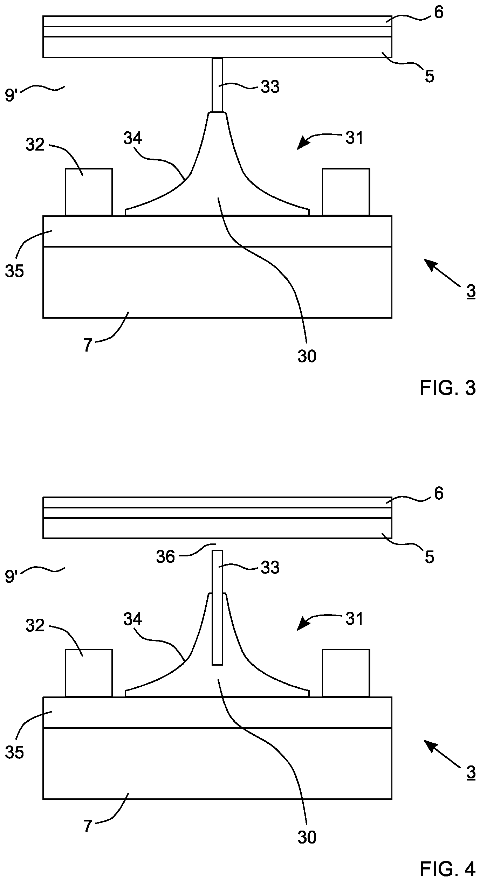

Fig. 3 zeigt schematisch eine Ausführungsform eines Stützelements 33. Zu sehen sind die optische Platte 5 mit dem Folienstapel 6 und die Hintergrundbeleuchtung 3 mit dem Gehäuse 7, der Leiterplatte 35 mit den darauf angeordneten Lichtquellen 32 und dem Reflektor 30. Bei dieser Ausführungsform ist das transparente Stützelement 33 auf eine Wand 34 der Kavitäten 31 aufgesetzt und reicht bis an die optische Platte 5 heran. Allerdings kann sich stattdessen auch ein Spalt zwischen dem Stützelement 33 und der optischen Platte 5 befinden. Das Stützelement 33 kann beispielsweise mittels Zweikomponenten-Spritzgießen gefertigt werden oder auf den Reflektor geklebt werden.

Fig. 4 zeigt schematisch eine weitere Ausführungsform eines Stützelements 33. Zu sehen sind die optische Platte 5 mit dem Folienstapel 6 und die Hintergrundbeleuchtung 3 mit dem Gehäuse 7, der Leiterplatte 35 mit den darauf angeordneten Lichtquellen 32 und dem Reflektor 30. Bei dieser Ausführungsform ist das transparente Stützelement 33 in eine Wand 34 der Kavitäten 31 eingelassen. Zwischen dem Stützelement 33 und der optischen Platte 5 befindet sich ein Spalt 36. Alternativ kann das Stützelement 33 bis an die optische Platte 5 heranreichen. Das Einlassen des Stützelements 33 in die Wand 34 kann z.B. mittels Einpresstechnik oder Heißverstemmen erfolgen.

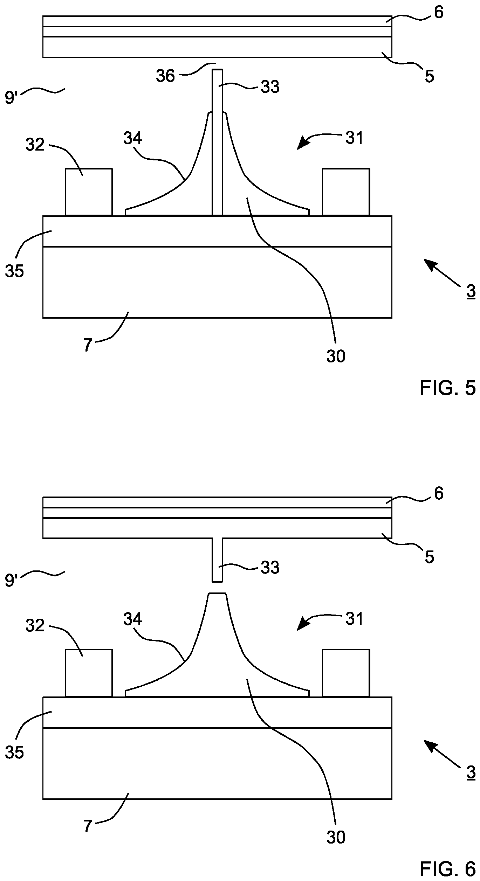

Fig. 5 zeigt schematisch eine erfindungsgemäße Ausführungsform eines Stützelements 33. Zu sehen sind die optische Platte 5 mit dem Folienstapel 6 und die Hintergrundbeleuchtung 3 mit dem Gehäuse 7, der Leiterplatte 35 mit den darauf angeordneten Lichtquellen 32 und dem Reflektor 30. Bei dieser Ausführungsform ist das transparente Stützelement 33 in eine Wand 34 der Kavitäten 31 eingelassen, allerdings stützt es sich auf die Leiterplatte 35. Auf diese Weise können die Stützelemente 33 zusätzlich dazu genutzt werden, den Reflektor 30 zu versteifen. Zwischen dem Stützelement 33 und der optischen Platte 5 befindet sich ein Spalt 36. Alternativ kann das Stützelement 33 bis an die optische Platte 5 heranreichen. Das Stützelement 33 kann z.B. als Säule mit der Leiterplatte 35 verklebt sein.

Fig. 6 zeigt schematisch eine weitere Ausführungsform eines Stützelements 33. Zu sehen sind die optische Platte 5 mit dem Folienstapel 6 und die Hintergrundbeleuchtung 3 mit dem Gehäuse 7, der Leiterplatte 35 mit den darauf angeordneten Lichtquellen 32 und dem Reflektor 30. Allerdings ist das transparente Stützelement 33 bei dieser Ausführungsform integraler Bestandteil der optischen Platte 5.

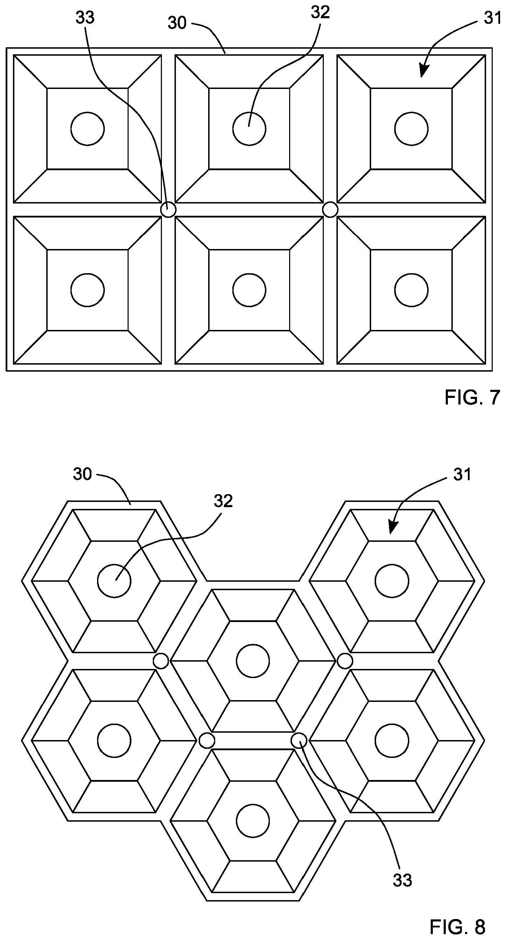

Fig. 7 zeigt schematisch einen Reflektor 30, bei dem ein Rechteckgitter ausgebildet ist. Die Anordnung der Kavitäten 31 und Lichtquellen 32 in einem Rechteckgitter erlaubt es, den Reflektor 30 aus einer lückenlosen Matrix von Kavitäten 31 zu bilden. Es ist dabei nicht notwendigerweise die gesamte Fläche der Hintergrundbeleuchtung mit Stützelementen 33 versehen. Eine lokale Positionierung ist ebenso möglich, z.B. beschränkt auf Randbereiche oder einen Mittenbereich in Bezug auf das Anzeigepaneel.

Fig. 8 zeigt schematisch einen Reflektor 30, bei dem ein Hexagonalgitter ausgebildet ist. Auch die Anordnung der Kavitäten 31 und Lichtquellen 32 in einem Hexagonalgitter erlaubt es, den Reflektor 30 aus einer lückenlosen Matrix von Kavitäten 31 zu bilden. Auch in diesem Fall ist nicht notwendigerweise die gesamte Fläche der Hintergrundbeleuchtung mit Stützelementen 33 versehen.

Eine lokale Positionierung ist ebenso möglich, z.B. beschränkt auf Randbereiche oder einen Mittenbereich in Bezug auf das Anzeigepaneel.

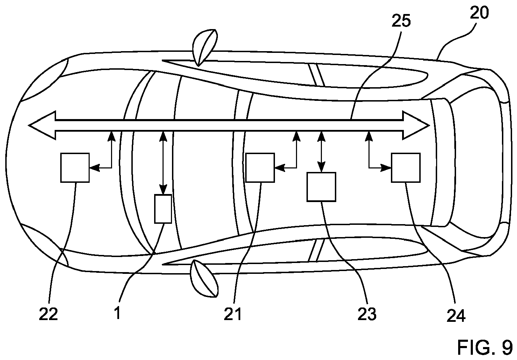

Fig. 9 zeigt schematisch ein Fortbewegungsmittel 20, das eine erfindungsgemäße Anzeigevorrichtung 1 nutzt. Bei dem Fortbewegungsmittel 20 handelt es sich in diesem Beispiel um ein Kraftfahrzeug. Das Kraftfahrzeug weist eine erfindungsgemäße Anzeigevorrichtung 1 auf, die in einer Armaturentafel angeordnet ist. Mit einer Sensorik 21 können Daten zur Fahrzeugumgebung erfasst werden. Die Sensorik 21 kann insbesondere Sensoren zur Umfelderkennung umfassen, z.B. Ultraschallsensoren, Laserscanner, Radarsensoren, Lidarsensoren oder Kameras. Die von der Sensorik 21 erfassten Informationen können genutzt werden, um anzuzeigende Inhalte für die Anzeigevorrichtung 1 zu generieren. Weitere Bestandteile des Kraftfahrzeugs sind in diesem Beispiel ein Navigationssystem 22, durch das Positionsinformationen bereitgestellt werden können, sowie eine Datenübertragungseinheit 23. Mittels der Datenübertragungseinheit 23 kann z.B. eine Verbindung zu einem Backend aufgebaut werden, beispielsweise um aktualisierte Software für Komponenten des Kraftfahrzeugs zu beziehen. Zur Speicherung von Daten ist ein Speicher 24 vorhanden. Der Datenaustausch zwischen den verschiedenen Komponenten des Kraftfahrzeugs erfolgt über ein Netzwerk 25.

### Bezugszeichenliste

- 1: Anzeigevorrichtung
- 2: Anzeigepaneel
- 3: Hintergrundbeleuchtung
- 30: Reflektor
- 31: Kavität
- 32: Lichtquelle
- 33: Stützelement
- 34: Wand
- 35: Leiterplatte
- 36: Spalt
- 4: Deckglas
- 5: Optische Platte
- 6: Folienstapel
- 7: Gehäuse der Hintergrundbeleuchtung
- 8: Gehäuse der Anzeigevorrichtung
- 9, 9': Spalt
- 10: Verbindungselement
- 20: Fortbewegungsmittel
- 21: Sensorik
- 22: Navigationssystem
- 23: Datenübertragungseinheit
- 24: Speicher
- 25: Netzwerk
- L: Licht

## Patentansprüche

1. Anzeigevorrichtung (1) mit einem Anzeigepaneel (2) und einer Hintergrundbeleuchtung (3) für das Anzeigepaneel (2), wobei die Hintergrundbeleuchtung (3) aufweist:
- einen Reflektor (30) mit einer Vielzahl von reflektierend ausgestalteten Kavitäten (31);
- eine Vielzahl von jeweils in den Kavitäten (31) angeordneten Lichtquellen (32); und
- Stützelemente (33), die für von den Lichtquellen (32) emittiertes Licht (L) transparent sind, sich auf eine Leiterplatte (35) stützen, auf der die Lichtquellen (32) angeordnet sind, und zumindest teilweise in einen Spalt (9') zwischen den Kavitäten (31) und einer unterhalb des Anzeigepaneels (2) angeordneten optischen Komponente (5) hineinragen;
**dadurch gekennzeichnet, dass** die Stützelemente (33) in Wände (34) der Kavitäten (31) eingelassen sind.

2. Anzeigevorrichtung (1) gemäß Anspruch 1, wobei die Stützelemente (33) mittels Einpresstechnik oder Heißverstemmen in die Wände (34) der Kavitäten (31) eingelassen sind.

3. Anzeigevorrichtung (1) gemäß Anspruch 1 oder 2, wobei die Hintergrundbeleuchtung (3) lediglich in Randbereichen oder in einem Mittenbereich des Anzeigepaneels (2) Stützelemente (33) aufweist.

4. Anzeigevorrichtung (1) gemäß einem der vorherigen Ansprüche, wobei Wände (34) der Kavitäten (31) verrundetet sind und die Kavitäten (31) ausgestaltet sind, das von den Lichtquellen (32) emittierte Licht (L) in Richtung des Anzeigepaneels (2) zu reflektieren.

5. Anzeigevorrichtung (1) gemäß Anspruch 4, wobei die Lichtquellen (32) seitlich emittierende Leuchtdioden sind.

6. Anzeigevorrichtung (1) gemäß Anspruch 5, wobei die seitlich emittierenden Leuchtdioden allseitig Licht (L) emittieren.

7. Anzeigevorrichtung (1) gemäß einem der vorherigen Ansprüche, wobei sich zwischen den Stützelementen (33) und einer von den Stützelementen (33) zu stützenden Komponente (2, 5) ein Spalt (36) befindet.

8. Anzeigevorrichtung (1) gemäß einem der vorherigen Ansprüche, wobei die Kavitäten (31) ein Rechteckgitter oder ein Hexagonalgitter bilden.

9. Anzeigevorrichtung (1) gemäß einem der vorherigen Ansprüche, wobei die Stützelemente (33) aus Polycarbonat oder Polymethylmethacrylat gebildet sind.

10. Fortbewegungsmittel (20) mit einer Anzeigevorrichtung (1) gemäß einem der vorherigen Ansprüche.

## Claims

1. Display device (1) having a display panel (2) and a backlight (3) for the display panel (2), the backlight (3) comprising:
- a reflector (30) with a plurality of reflectively embodied cavities (31);
- a multiplicity of light sources (32) arranged in each case in the cavities (31); and
- support elements (33) which are transparent to light (L) emitted by the light sources (32), are supported on a circuit board (35), have the light sources (32) arranged thereon, and protrude at least partially into a gap (9') between the cavities (31) and an optical component (5) arranged below the display panel (2); **characterized in that** the support elements (33) are embedded in walls (34) of the cavities (31).

2. Display device (1) according to Claim 1, wherein the support elements (33) are embedded in the walls (34) of the cavities (31) by means of a press-in technique or heat staking.

3. Display device (1) according to Claim 1 or 2, wherein the backlight (3) has support elements (33) only in peripheral regions or in a central region of the display panel (2).

4. Display device (1) according to one of the preceding claims, wherein walls (34) of the cavities (31) are rounded and the cavities (31) are designed to reflect the light (L), emitted by the light sources (32), in the direction of the display panel (2).

5. Display device (1) according to Claim 4, wherein the light sources (32) are side-emitting light-emitting diodes.

6. Display device (1) according to Claim 5, wherein the side-emitting light-emitting diodes emit light (L) on all sides.

7. Display device (1) according to one of the preceding claims, wherein a gap (36) is located between the support elements (33) and a component (2, 5) to be supported by the support elements (33).

8. Display device (1) according to one of the preceding claims, wherein the cavities (31) form a rectangular grid or a hexagonal grid.

9. Display device (1) according to one of the preceding claims, wherein the support elements (33) are made of polycarbonate or polymethyl methacrylate.

10. Transportation means (20) having a display device (1) according to one of the preceding claims.

## Revendications

1. Dispositif d'affichage (1) avec un panneau d'affichage (2) et un rétroéclairage (3) pour le panneau d'affichage (2), dans lequel le rétroéclairage (3) présente :
- un réflecteur (30) avec une pluralité de cavités (31) conçues pour être réfléchissantes ;
- une pluralité de sources de lumière (32) agencées respectivement dans les cavités (31) ; et
- des éléments d'appui (33), qui sont transparents à la lumière (L) émise par les sources de lumière (32), s'appuient sur une carte de circuit imprimé (35) sur laquelle sont agencées les sources de lumière (32) et font saillie au moins partiellement dans un espace (9') entre les cavités (31) et un composant optique (5) agencé au-dessous du panneau d'affichage (2) ;
**caractérisé en ce que** les éléments d'appui (33) sont encastrés dans des parois (34) des cavités (31).

2. Dispositif d'affichage (1) selon la revendication 1, dans lequel les éléments d'appui (33) sont encastrés dans les parois (34) des cavités (31) au moyen d'une technique d'enfoncement ou d'un matriçage à chaud.

3. Dispositif d'affichage (1) selon la revendication 1 ou 2, dans lequel le rétroéclairage (3) présente des éléments d'appui (33) uniquement dans des zones de bord ou dans une zone centrale du panneau d'affichage (2).

4. Dispositif d'affichage (1) selon l'une quelconque des revendications précédentes, dans lequel les parois (34) des cavités (31) sont arrondies et les cavités (31) sont configurées pour réfléchir la lumière (L) émise par les sources de lumière (32) en direction du panneau d'affichage (2).

5. Dispositif d'affichage (1) selon la revendication 4, dans lequel les sources de lumière (32) sont des diodes électroluminescentes à émission latérale.

6. Dispositif d'affichage (1) selon la revendication 5, dans lequel les diodes électroluminescentes à émission latérale émettent de la lumière (L) de tous côtés.

7. Dispositif d'affichage (1) selon l'une quelconque des revendications précédentes, dans lequel un espace (36) est présent entre les éléments d'appui (33) et un composant (2, 5) devant être supporté par les éléments d'appui (33).

8. Dispositif d'affichage (1) selon l'une quelconque des revendications précédentes, dans lequel les cavités (31) forment une grille rectangulaire ou une grille hexagonale.

9. Dispositif d'affichage (1) selon l'une quelconque des revendications précédentes, dans lequel les éléments d'appui (33) sont formés de polycarbonate ou de polyméthacrylate de méthyle.

10. Moyen de locomotion (20) avec un dispositif d'affichage (1) selon l'une quelconque des revendications précédentes.
